# EUROPEAN PATENT APPLICATION

(11) **EP 4 665 064 A1**
(43) Date of publication of application: **17.12.2025**
(21) Application number: 24753556.0
(22) Date of filing: 01.02.2024
(51) Int. Cl.: H04W 74/00, H04B 7/024, H04W 16/02, H04W 52/14, H04W 84/12

(54) **METHOD AND DEVICE FOR TRANSMITTING AND RECEIVING PPDU IN WIRELESS LAN SYSTEM**

(30) Priority: 08.02.2023 KR 20230016935
(71) Applicant: LG Electronics Inc., Yeongdeungpo-gu Seoul 07336 (KR)
(72) Inventor: CHUN, Jinyoung, Seoul 06772 (KR); CHOI, Jinsoo, Seoul 06772 (KR); LIM, Dongguk, Seoul 06772 (KR); PARK, Eunsung, Seoul 06772 (KR); JANG, Insun, Seoul 06772 (KR)
(74) Representative: Mooser, Sebastian Thomas
(86) International application number: PCT/KR2024/001565
(87) International publication number: WO 2024/167227

(57) **Abstract**

Disclosed are a method and device for transmitting and receiving a PPDU in a wireless LAN system. A method performed by a first STA, according to one embodiment of the present disclosure, may comprise the steps of: receiving a trigger frame from a first AP; and on the basis of the trigger frame, transmitting an UL TB PPDU to the first AP or receiving a first downlink (DL) PPDU from the first AP.

## Description

### [Technical Field]

The present disclosure relates to a method and an apparatus for transmitting and receiving a physical protocol data unit (PPDU) in a wireless local area network (WLAN) system.

### [Background Art]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.1 1ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide a method and an apparatus for transmitting and receiving PPDU in a wireless LAN system supporting multi-AP (multi-AP) operation.

An additional technical object of the present disclosure is to provide a method and an apparatus for supporting single AP operation while triggering multi-AP operation in a wireless LAN system supporting multi-AP operation.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless local area network (WLAN) system according to an aspect of the present disclosure may include: receiving a trigger frame from a first access point (AP); and performing transmission of an uplink trigger-based physical protocol data unit (UL TB PPDU) to the first AP or reception of a first downlink PPDU (DL PPDU) from the first AP, based on the trigger frame. The trigger frame may include information for triggering transmission of a second DL PPDU by a second AP to a second STA.

A method performed by a first access point (AP) in a wireless local area network (WLAN) system according to an additional aspect of the present disclosure may include: transmitting a trigger frame; and receiving an uplink trigger-based physical protocol data unit (UL TB PPDU) from a first station (STA) or transmitting a first downlink PPDU (DL PPDU) to the first STA, based on the trigger frame. The trigger frame may include information for triggering transmission of a second DL PPDU to the second STA by the second AP.

### [Technical Effects]

According to an embodiment of the present disclosure, since multi-AP operation and single-AP operation are supported in an aggregated manner, occurrence of collision and interference between them can be minimized or prevented.

In addition, according to an embodiment of the present disclosure, since multi-AP operation and single-AP operation are supported in an aggregated manner, utilization efficiency of wireless resources can be improved.

Effects achievable by the present disclosure are not limited to the above-described effects, and other effects which are not described herein may be clearly understood by those skilled in the pertinent art from the following description.

### [Brief Description of the Drawings]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illustrating an exemplary format of a trigger frame to which the present disclosure can be applied.
FIG. 9 is a diagram illustrating an exemplary format of a trigger frame to which the present disclosure can be applied.
FIG. 10 is a diagram illustrating an aggregated communication process of multi-AP communication and single-AP communication according to an embodiment of the present disclosure.
FIG. 11 is a diagram illustrating an aggregated communication process of multi-AP communication and single-AP communication according to an embodiment of the present disclosure.
FIG. 12 illustrates an operation of a STA for a PPDU transmission/reception method according to an embodiment of the present disclosure.
FIG. 13 illustrates an operation of a AP for a PPDU transmission/reception method according to an embodiment of the present disclosure.FIG. 1 illustrates a structure of a wireless communication system to which the present disclosure may be applied.

### [Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.1 1be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

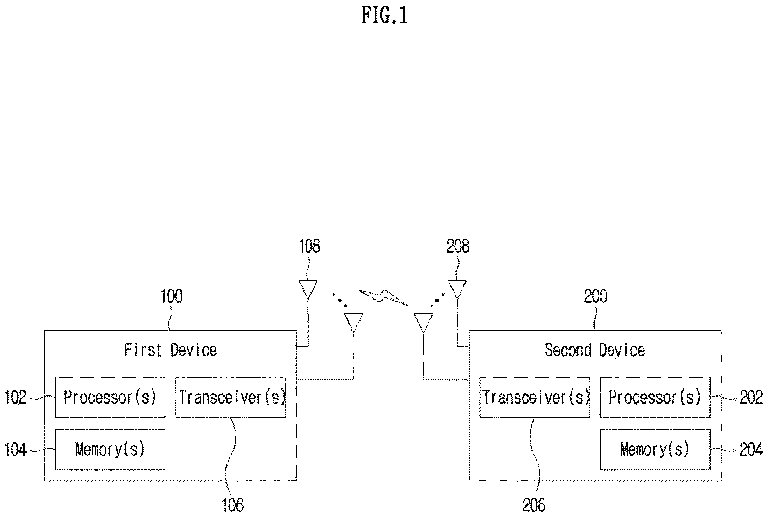

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

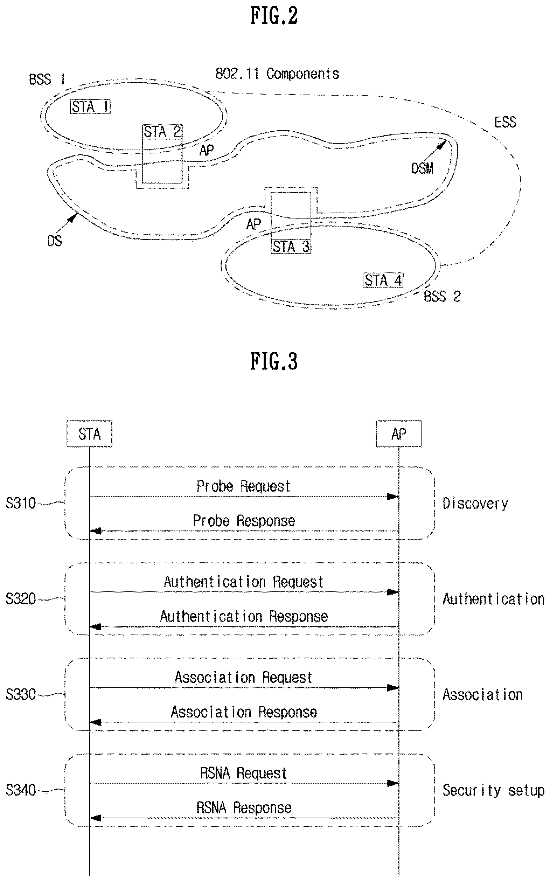

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

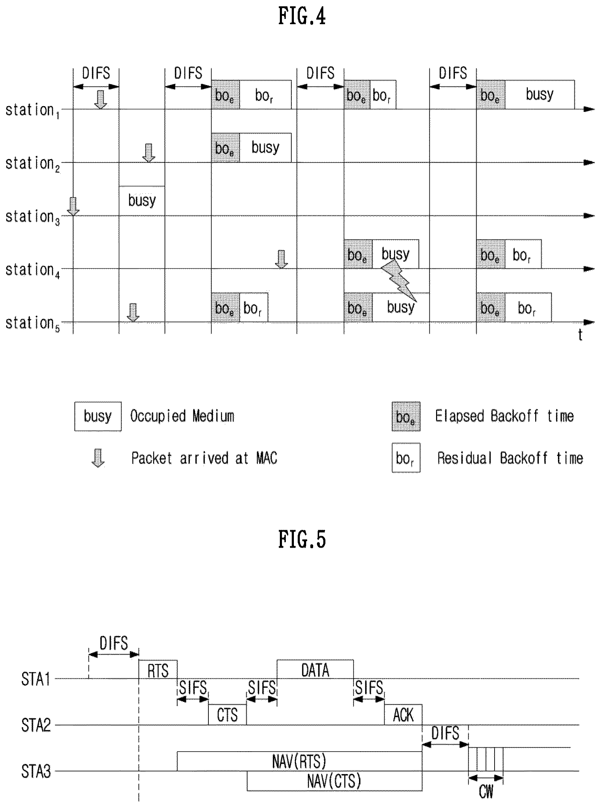

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

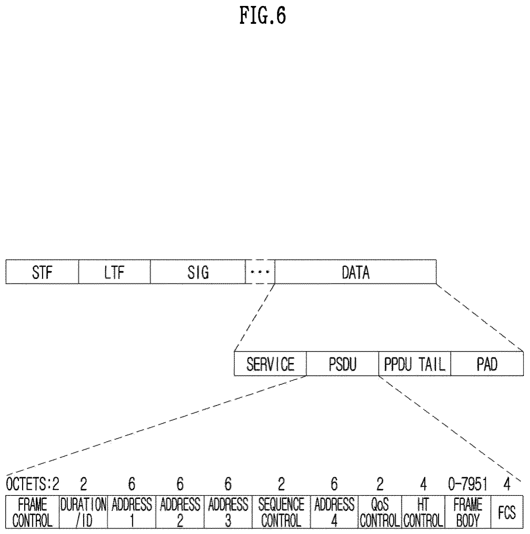

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

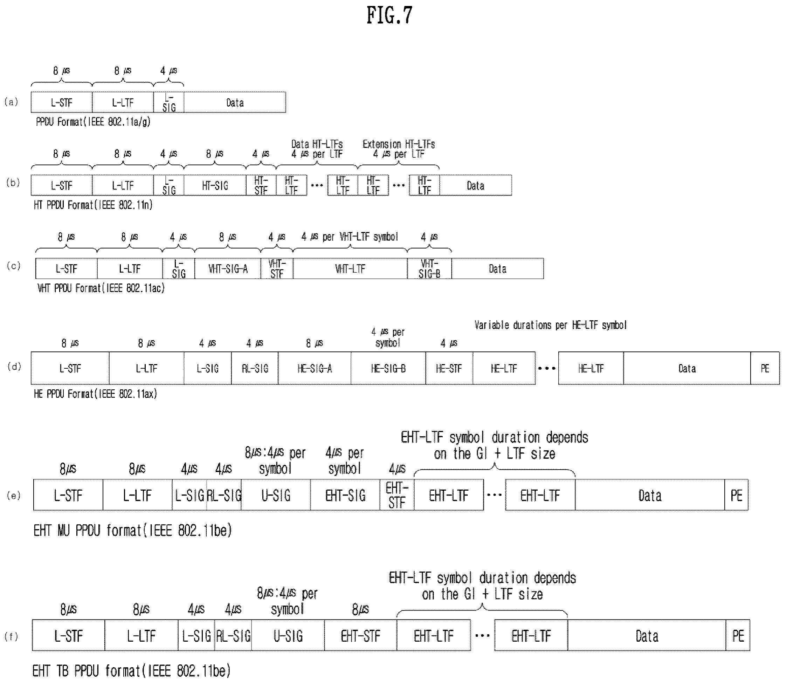

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.1 1ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Trigger frame

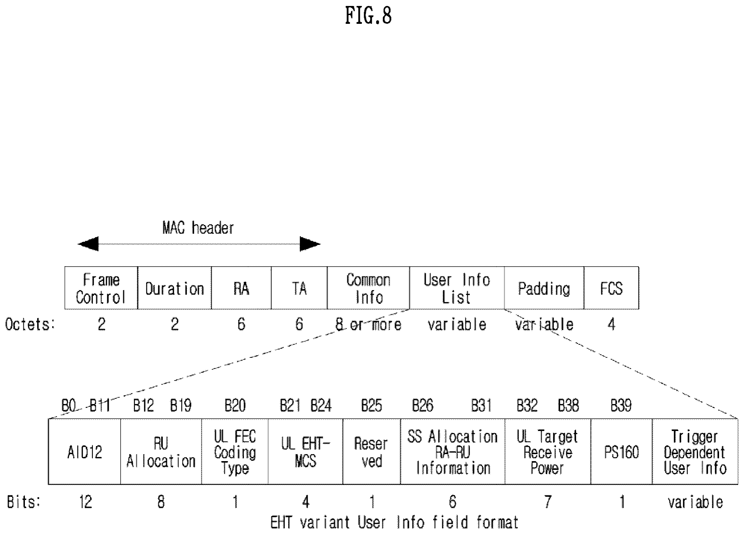

FIG. 8 is a diagram illustrating an exemplary format of a trigger frame to which the present disclosure can be applied.

A trigger frame may allocate resources for one or more TB PPDU transmissions and request TB PPDU transmissions. The trigger frame may also include other information required by an STA transmitting a TB PPDU in response thereto. The trigger frame may include common info and user info list fields in the frame body.

The common info field may include information that is commonly applied to one or more TB PPDU transmissions requested by the trigger frame, such as a trigger type, UL length, whether a subsequent trigger frame exists (e.g., More TF), whether CS (channel sensing) is required, UL BW (bandwidth), etc.

The user info list includess zero or more user info fields. FIG. 8 exemplarily illustrates an EHT variant user info field format.

The AID12 subfield basically indicates that it is a user information field for an STA having the corresponding AID. In addition, if the AID12 field has a predetermined specific value, it may be utilized for other purposes, such as allocating a random access (RA)-RU, or being configured in the form of a special user info field. The special user info field is a user information field that does not include user specific information but includes extended common information that is not provided in the common information field. For example, the special user info field can be identified by the AID12 value of 2007, and the special user info field flag subfield in the common information field can indicate whether the special user info field is included.

The RU allocation subfield can indicate the size and position of RU/MRU. For this purpose, the RU allocation subfield can be interpreted together with the PS160 (primary/secondary 160MHz) subfield of the user information field, the UL BW subfield of the common information field, etc. For example, the mapping of B7-B1 of the RU allocation subfield can be defined together with the settings of B0 of the RU allocation subfield and the PS160 subfield of as shown in Table 1 below. Table 1 shows an example of encoding of the PS160 subfield and the RU allocation subfield of the EHT variant user information field.

**[Table 1]**

| **PS160 subfield** | **B0 of the RU Allocation subfield** | **B7-B1 of the RU Allocation subfield** | **Bandwidth (MHz)** | **RU or MRU size** | **RU or MRU index** | **PHY RU or MRU index** |
|---|---|---|---|---|---|---|
| 0-3: | | 0-8 | 20, 40, 80, 160, or 320 | 26 | RU1 to RU9, respectively | 37×*N*+ RU index |
| 80 MHz frequency subblock where the RU is located (See NOTE 1) | | | | | | |
| | | 9-17 | 40, 80, 160, or 320 | | RU10 to RU18, respectively | |
| | | 18 | 80, 160, or 320 | | Reserved | |
| | | 19-36 | 80, 160, or 320 | | RU20 to RU37 respectively | |
| | | 37-40 | 20, 40, 80, 160, or 320 | 52 | RU1 to RU4, respectively | 16×*N*+ RU index |
| | | 41-44 | 40, 80, 160, or 320 | | RU5 to RU8, respectively | |
| | | 45-52 | 80, 160, or 320 | | RU9 to RU16, respectively | |
| | | 53, 54 | 20, 40, 80, 160, or 320 | 106 | RU1 and RU2, respectively | 8×*N*+ RU index |
| | | 55, 56 | 40, 80, 160, or 320 | | RU3 and RU4, respectively | |
| | | 57-60 | 80, 160, or 320 | | RU5 to RU8, respectively | |
| | | 61 | 20, 40, 80, 160, or 320 | 242 | RU1 | 4×*N*+ RU index |
| | | 62 | 40, 80, 160, or 320 | | RU2 | |
| | | 63, 64 | 80, 160, or 320 | | RU3 and RU4, respectively | |
| | | 65 | 40, 80, 160, or 320 | 484 | RU1 | 2×*N*+ RU index |
| | | 66 | 80, 160, or 320 | | RU2 | |
| | | 67 | 80, 160, or 320 | 996 | RU1 | N+ RU index |
| 0-1: | 0 | 68 | 20, 40, 80, 160, or 320 | Reserved | Reserved | Reserved |
| 160 MHz segment where the RU is located (See NOTE 3) | | | | | | |
| | 1 | | 160 or 320 | 2×996 | RU1 | X1 + RU index |
| 0 | 0 | 69 | 20, 40, 80, 160, or 320 | Reserved | Reserved | Reserved |
| 0 | 1 | | | | | |
| 1 | 0 | | | | | |
| 1 | 1 | | 320 | 4×996 | RU1 | RU1 |
| 0-3: | | 70 | 20, 40 | 52+26 | MRU1 | |
| 80 MHz frequency subblock where the MRU is located (See NOTE 1) | | | 80, 160, or 320 | Reserved | Reserved | |
| | | 71-72 | 20, 40, 80, 160, or 320 | 52+26 | MRU2 and MRU3, respectively | |
| | | 73-74 | 40, 80, 160, or 320 | 52+26 | MRU4 and MRU5, respectively | |
| | | 75 | 40 | 52+26 | MRU6 | 12×*N*+ MRU index |
| | | | 80, 160, or 320 | Reserved | Reserved | |
| | | 76 | 20, 40, 80, 160, or 320 | Reserved | Reserved | |
| | | 77-80 | 80, 160, or 320 | 52+26 | MRU8 to MRU11, respectively | |
| | | 81 | 20, 40, 80, 160, or 320 | Reserved | Reserved | |
| | | 82 | 20, 40, 80, 160, or 320 | 106+26 | MRU1 | |
| | | 83 | 20, 40 | 106+26 | MRU2 | |
| | | | 80, 160, or 320 | Reserved | Reserved | |
| | | 84 | 40 | 106+26 | MRU3 | |
| | | | 80, 160, or 320 | Reserved | Reserved | 8×*N*+ MRU index |
| | | 85 | 40, 80, 160, or 320 | 106+26 | MRU4 | |
| | | 86 | 80, 160, or 320 | 106+26 | MRU5 | |
| | | 87-88 | 20, 40, 80, 160, or 320 | Reserved | Reserved | |
| | | 89 | 80, 160, or 320 | 106+26 | MRUS | |
| | | 90-93 | 80, 160, or 320 | 484+242 | MRU1 to MRU4, respectively | 4×*N*+ MRU index |
| 0-1: | 0 | 94, 95 | 160 or 320 | 996+484 | MRU1 and MRU2, respectively | 4×X1 + MRU index |
| 160 MHz segment where the MRU is located (See NOTE 3) | | | | | | |
| | 1 | | | | MRU3 and MRU4, respectively | |
| 0: MRU is located in the primary 160 MHz | 0 | 96-99 | 160 | 996+484+ 242 | MRU1 to MRU4, respectively | MRU index |
| | 1 | | | | MRU5 to MRU8, respectively | |
| 1 | Any | | 20, 40, 80, 160, or 320 | Reserved | Reserved | Reserved |
| 0 | 0 | 100-103 | 320 | 2×996 +484 | MRU1 to MRU4, respectively | MRU index |
| 0 | 1 | 100-101 | | | MRU5 and MRU6, respectively | |
| 0 | 1 | 102-103 | 20, 40, 80, 160, or 320 | Reserved | Reserved | |
| 1 | 0 | 100-101 | 20, 40, 80, 160, or 320 | Reserved | Reserved | |
| 1 | 0 | 102-103 | 320 | 2×996 +484 | MRU7 and MRU8, respectively | |
| 1 | 1 | 100-103 | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3×996 +484 | MRU 1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | 20, 40, 80, 160, or 320 | Reserved | Reserved | Reserved |

When B0 of the RU allocation subfield is set to 0, it may indicate that the RU/MRU allocation is applied to the primary 80 MHz channel, and when its value is set to 1, it may indicate that the RU allocation is applied to the secondary 80 MHz channel of the primary 160 MHz. When B0 of the RU Allocation subfield is set to 0, it can indicate that RU/MRU allocation is applied to the lower 80 MHz of the secondary 160 MHz, and when its value is set to 1, it can indicate that RU allocation is applied to the upper 80 MHz of the secondary 160 MHz.

In the trigger frame RU allocation table of Table 1, the parameter N can be calculated based on the formula of N=2*X1+X0. For a bandwidth of 80 MHz or less, the values of PS160, B0, X0, and X1 can be set to 0. For a bandwidth of 160 MHz and a bandwidth of 320 MHz, the values of PS160, B0, X0, and X1 can be set as shown in Table 2. These settings represent the absolute frequency order for the primary and secondary 80 MHz and 160 MHz channels. The order from left to right represents the order from low frequency to high frequency. The primary 80 MHz channel is represented as P80, the secondary 80 MHz channel is represented as S80, and the secondary 160 MHz channel is represented as S160.

**[Table 2]**

| **Bandwidth (MHz)** | **Inputs** | | | **Outputs** | | |
|---|---|---|---|---|---|---|
| | **Configuration** | **PS160** | **B0** | **X0** | **X1** | **N** |
| 20/40/80 | [P80] | 0 | 0 | 0 | 0 | 0 |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

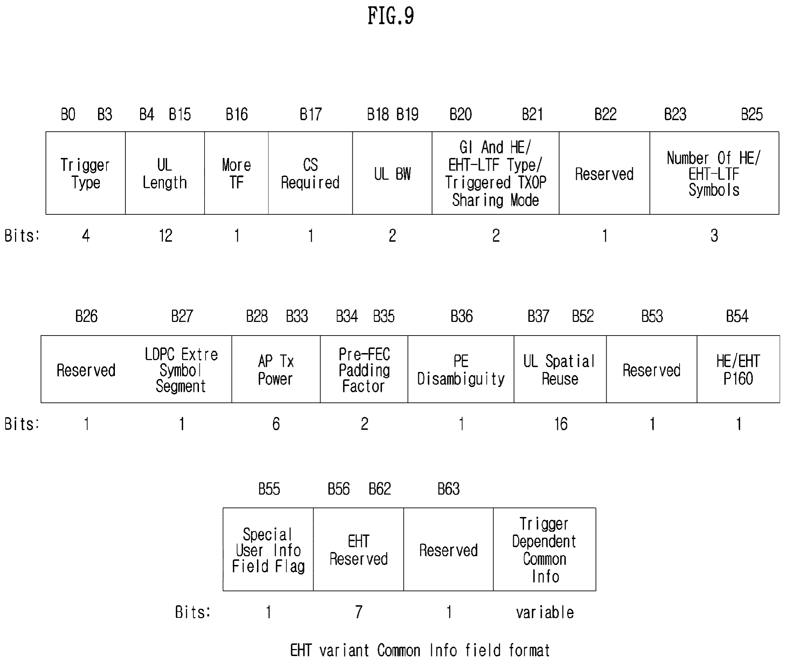

FIG. 9 is a diagram illustrating an exemplary format of a trigger frame to which the present disclosure can be applied.

FIG. 9 illustrates an example of the EHT variant common info field format in the trigger frame illustrated in FIG. 8.

The trigger type subfield identifies a variant of the trigger frame.

The uplink length (UL) subfield indicates the value of the L-SIG LENGTH field of the solicited TB PPDU.

The more TF (trigger frame) subfield indicates whether transmission of a subsequent trigger frame is scheduled.

The carrier sense required (CS) subfield is set to 1 to indicate that the STAs identified in the User Info field should use energy detection (ED) to sense the medium and consider the medium condition and the network allocation vector (NAV) when determining whether to respond. The CS Required subfield is set to 0 to indicate that the STAs identified in the User Info field do not need to consider the medium condition or NAV when determining whether to respond.

The uplink bandwidth (UL BW) subfield, together with the uplink bandwidth extension (UL BW extension) subfield of the special user info field, indicates the bandwidth within the U-SIG field of the EHT TB PPDU.

If the trigger type subfield indicates an MU-RTS (request to send) trigger frame as the type of the corresponding trigger frame, B20-B1 of the EHT variant common info field corresponds to the trigger TXOP (transmission opportunity) sharing mode subfield. Otherwise, B20-B1 of the EHT variant common info field corresponds to the GI (guard interval) and HE/ETF-LTF type subfield. The GI and HE/ETF-LTF type subfields indicate the GI and HE/EHT-LTF type of the HE or EHT TB PPDU response. The trigger TXOP sharing mode subfield indicates the triggered TXOP mode.

B22 of the EHT variant common info field is reserved and set to 0.

The number of HE/EHT-LTF symbols subfield indicates the number of HE-LTF symbols present in the HE TB PPDU or the number of EHT-LTF symbols present in the EHT TB PPDU.

B26 of the EHT variant common info field is reserved and set to 0.

The LDPC (low-density parity check) extra symbol segment subfield indicates the status of the LDPC extra symbol segment. If an LDPC extra symbol segment exists in the requested HE or EHT TB PPDU, it is set to 1; otherwise, it is set to 0.

The AP Tx (transmit) power subfield indicates the combined transmit power of the AP at the transmit antenna connectors of all antennas used to transmit the triggering PPDU in dBm/20MHz.

The pre-FEC padding factor subfield and the PE disambiguity subfield are encoded identically to the corresponding subfields in HE-SIG-A or EHT-SIG.

The UL spatial reuse subfield includes spatial reuse n subfields (1 ≤ n ≤ 4). When a trigger frame requests an EHT TB PPDU, each spatial reuse n subfield of the EHT variant common info field is determined based on the EHT spatial reuse 1 subfield or the EHT spatial reuse 2 subfield of the special user info field.

B53 of the EHT variant common info field is reserved and set to 0.

The HE/EHT P160 subfield is set to 0 to indicate that the TB PPDU requested on the primary 160 MHz is an EHT TB PPDU. The HE/EHT P160 subfield is set to 1 to indicate that the TB PPDU requested on the primary 160 MHz is an HE TB PPDU.

The special user info field flag subfield is always set to 0 in the EHT variant common info field, indicating that the special user info field is included in the trigger frame including the EHT variant common info field.

The trigger dependent common info subfield is optionally present based on the value of the trigger type field.

### Triggered TXOP sharing procedure

The triggered TXS (TXOP sharing) procedure allows an AP to allocate a portion of its acquired TXOP to one or more associated non-AP EHT STAs to transmit one or more non-TB PPDUs.

When the triggered TXOP sharing mode subfield in the common info field of the MU-RTS frame (i.e., the trigger frame variant) transmitted by the EHT AP is set to a non-zero value, the frame indicates the associated non-AP EHT STAs to allocate time within the acquired TXOP to sequentially transmit one or more non-TB PPDUs. Otherwise, the triggered TXOP sharing mode subfield is set to 0.

Table 3 illustrates an encoding of the triggered TXOP sharing mode subfield.

**[Table 3]**

| **Triggered TXOP Sharing Mode subfield value** | **Description** |
|---|---|
| 0 | MU-RTS that does not initiate triggered TXOP sharing procedure. |
| 1 | MU-RTS that initiates triggered TXOP sharing procedure wherein a scheduled STA can only transmit MPDU(s) addressed to its associated AP. |
| 2 | MU-RTS that initiates triggered TXOP sharing procedure wherein a scheduled STA can transmit MPDU(s) addressed to its associated AP or addressed to another STA. |
| 3 | Reserved. |

Referring to Table 3, if the value of the triggered TXOP sharing mode subfield is 0, the triggered TXOP sharing procedure is not initiated. If the value of the triggered TXOP sharing mode subfield is 1, the triggered TXOP sharing procedure is initiated, and the scheduled STA can transmit MPDU(s) only to the AP to which it is associated. If the value of the triggered TXOP sharing mode subfield is 2, the triggered TXOP sharing procedure is initiated, and the scheduled STA can transmit MPDU(s) to the AP to which it is associated or to another STA.

The time allocated to the associated non-AP EHT STA is indicated by the allocation duration subfield in the user info field of the MU-RTS TXS trigger frame.

If the EHT AP determines that the MU-RTS TXS trigger frame with the triggered TXOP sharing mode subfield set to 1 or 2 has been successfully transmitted to the non-AP EHT STA, the AP shall not transmit any PPDU within the allocated time specified in the MU-RTS TXS trigger frame, unless special conditions such as transmission of a PPDU carrying a requested immediate response by the non-AP STA are satisfied.

After a non-AP EHT STA receives an MU-RTS TXS trigger frame with a user info field assigned to it from its associated AP, the STA may transmit one or more non-TB PPDUs within the time allocation signaled in the MU-RTS TXS trigger frame.

A non-AP EHT STA assigned by the user info field in the RTS TXS trigger frame shall fully align its PPDU transmission(s) and any expected response within the allocated time.

### Subchannel selective transmission (SST)

An S1G non-AP STA associated with an AP performs transmission and reception operations on a channel or channels that the AP indicates as activated operating channel(s) for the BSS.

The SST operation can be divided into an aperiodic SST operation and a periodic SST operation.

During an aperiodic SST operation, the SST AP indicates a set of activated SST operating channels in the SST operation element. Additionally, during an aperiodic SST operation, the SST AP indicates a subset of SST operating channels to which SST STAs are allowed access during a beacon interval or a short beacon interval.

During a periodic SST operation, the SST AP indicates a set of activated SST operating channels in the SST operation element, and the SST AP indicates a subset of SST operating channels to which SST STAs are allowed access during the beacon interval or short beacon interval.

An SST STA is an STA associated with an SST AP, and an SST STA selects a subset of the activated operating channels for SST operations operating within a BSS when SST operating channels are activated by the AP.

An SST STA operating within an SST BSS is allowed to transmit on an SST channel during a beacon interval or a short beacon interval only if the channel is permitted for SST utilization as indicated by an SST SP.

A HE SST non-SP STA and a HE SST AP may setup SST operation by negotiating a trigger-enabled target wake time (TWT) with the following exceptions:
- A TWT request may include a TWT channel field with up to 1 bit, which is set to 1 to indicate the requested secondary channel to contain the RU allocation designated to the HE SST non-AP STA that is a 20MHz operating STA.
- A TWT request may include a TWT channel field, where either all least significant bits (LSBs) or all four most significant bits (MSBs) are set to 1 to indicate whether the primary 80 MHz channel or the secondary 80 MHz channel is requested to include RU allocation for a HE SST non-AP STA that is an 80 MHz operating STA.
- The TWT response shall include a TWT channel field having at most 1 bit, which is set to 1 to indicate a secondary channel containing RU allocation for a HE SST non-AP STA that is a 20MHz operating STA.
- The TWT response may include a TWT channel field, which is set to 1 for all LSBs or all 4 MSBs to indicate whether the primary 80MHz channel or the secondary 80MHz channel contains RU allocation for a HE SST non-AP STA that is an 80MHz operating STA.

### Aggregated operation of multi-AP and single-AP

The multi-AP operation to which the method proposed in this disclosure can be applied is described.

Multi-AP operation refers to a general term for a technique in which multiple APs/STAs cooperate with each other to transmit and receive data when communicating with STA(s), and for example, the following techniques can be used.
- Type 1: Co-transmission of multi-APs/STAs: This transmission technique refers to a technique in which multiple APs simultaneously transmit to STA(s). Co-transmission can be classified in detail as follows.
   i) Co-transmission of multi-APs/STAs to each STA (e.g., co-spatial reuse (C-SR)): APs/STAs can share channel information (e.g., transmit power (Tx Power), received signal strength indicator (RSSI), etc.) with STA(s), and can perform communication between each AP and STA at the same time based on the shared channel information.
   ii) Joint-transmission of multi-APs/STAs to the same STA(s) (e.g., joint transmission (J-TX))
   Multiple APs/STAs can share channel information and data with STA(s), and can perform communication between multiple APs and STA(s) at the same time based on the shared channel information and data.
- Type 2: Multi-APs/STAs coordination: Among multiple APs, an appropriate AP can divide the appropriate area (i.e., frequency/time/space area) and transmit to appropriate STA(s).
   i) Distinction by frequency domain (e.g., coordinated OFDMA (C-OFDMA)): APs/STAs share channel information according to frequency bands with STA(s), and based on the shared channel information, each AP selects an appropriate frequency band to perform communication between each AP and STA.
   ii) Distinction by spatial domain (e.g., coordinated beamforming (C-BF)): APs/STAs share channel information with STA(s), and based on the shared channel information, a beamforming (BF) matrix suitable for communication of each AP or that does not interfere with other APs is calculated to perform communication between each AP and STA.
   iii) Distinction by time domain (e.g., AP selection, relay, virtual BSS (V-BSS)): The representative AP selects APs/STAs suitable for the STA(s) (including the representative AP) and controls communication between the AP/STA and the STA.

In order to support the above multi-AP operation, the representative AP can select and indicate an AP/STA (hereinafter referred to as a participating AP/STA) for communication with the STA. Here, the meanings of the representative AP and the participating AP/STA are as follows.
i) Representative AP (also referred to as master AP, sharing AP)
   - The representative AP initiates and controls multi-AP operation, a technology for transmission and reception by multiple APs.
   - The representative AP groups participating APs and manages links with participating APs so that information (e.g., information about channels and/or data) can be shared among participating APs.
   - The representative AP manages the information of the BSS composed of the participating APs and the information of the STAs associated with the BSS.
ii) Participating AP (also referred to as slave AP or shared AP)
   - The participating AP is associated with the representative AP and can share control information, management information, and data traffic with each other.
   - Participating AP basically performs the same function as an AP that can establish a BSS in a conventional WLAN system.
iii) Participating STA
   - Like in a conventional WLAN, it forms a BSS by associating with a representative AP or a participating AP.

In addition, the multi-AP operating environment is as follows.

The representative AP and the participating AP may be capable of direct transmission and reception of wired or wireless (e.g., control information and/or data) with each other. In addition, the representative AP and the STA may not be capable of direct transmission and reception of wireless signals (e.g., control information and/or data) with each other. In addition, the participating AP (i.e., associated with the STA) and the STA may be capable of direct transmission and reception of wireless signals (e.g., control information and/or data) with each other. In addition, one of the participating APs may become the representative AP.

In addition, a DL or UL procedure for multi-AP operation may be roughly performed as follows:
1. The representative AP indicates the participating AP(s) (e.g., initiation of multi-AP operation, scheduling information, etc.).
   Here, after receiving an acknowledgment (Ack) from participating APs in response to the representative AP's indication (e.g., initiation of multi-AP operation, scheduling information, etc.), the representative AP can indicate Multi-AP operation by rescheduling only for the APs that transmitted the Ack.
2. The participating AP(s) transmit DL data transmission or DL trigger (i.e., trigger for UL data transmission of STA) to the STA(s).
3. The receiving STA(s) transmits an Ack transmission (i.e., when DL data is received) or UL data (i.e., when a trigger for UL data transmission is received) to the participating AP(s).
   Here, in the case of a UL procedure (i.e., when the STA transmits UL data to the participating AP(s), the participating AP(s) may transmit an Ack to the STA(s) if necessary.
4. The participating AP(s) may report the result (or completion of multi-AP operation) to the representative AP.

Hereinafter, in the description of the present disclosure, for the convenience of explanation, the AP transmitting the trigger frame in step 1 is referred to as a representative AP, but is not limited thereto, and may be referred to as a master AP, a sharing AP, a primary AP, etc. In addition, the AP receiving the trigger frame in step 1 is referred to as a participating AP, but is not limited thereto, and may be referred to as a slave AP, a shared AP, a secondary AP, etc.

The present disclosure proposes a method for step 1 of the above-described procedure, that is, a method for a representative AP to trigger (indication for initiation) a multi-AP operation.

In relation to step 1, the method for a representative AP to indicate a multi-AP operation (i.e., a method for triggering a multi-AP operation) may be as follows.

### 1) Direct transmission indication (or short-term indication)

According to this method, the representative AP can directly indicate the participating AP(s) to transmit. In other words, it can mean a method in which the representative AP dynamically indicates the participating AP(s) whenever the multi-AP operation starts.

The frame that triggers the multi-AP operation can be referred to as a multi-AP downlink trigger frame (MAD trigger frame), but the present disclosure is not limited thereto.

The MAD trigger frame can reuse the existing basic trigger frame structure (e.g., FIGS. 8 and 9). Alternatively, the MAD trigger frame can be configured as a new type of trigger frame. In this case, for example, the new type of MAD trigger frame can be indicated in the trigger type subfield illustrated in FIG. 9. Alternatively, the MAD trigger frame can be defined as a new control frame.

The existing trigger frame is transmitted for the purpose of triggering UL TB PPDU transmission of a non-AP STA, but the MAD trigger frame is transmitted for the purpose of triggering DL PPDU transmission of a participating AP participating in a multi-AP operation, so their purposes are different.

### 1) Transmission interval indication (or mid-term indication)

The representative AP can inform the participating AP(s) of the multi-AP operation section. For example, the MU-RTS TXS trigger frame (i.e., the trigger frame that triggers the TXOP sharing procedure described above) can be used.

The existing MU-RTS TXS trigger frame notifies the TXOP duration with the AP or another STA associated with the scheduled STA as the value of the triggered TXOP sharing mode subfield is set to 1 or 2. As an example of a method of applying the MU-RTS TXS trigger frame to the multi-AP operation in the present disclosure, the values of 1 or 2 of the triggered TXOP sharing mode subfield may be used identically. As another example, the reserved value 3 of the triggered TXOP sharing mode subfield may be used to separately define a TXOP allocation method for the multi-AP procedure. In addition, in order to support such a multi-AP operation, unlike the existing MU-RTS TXS trigger frame, it may be allowed to include one or more User Info fields.

In the wireless LAN system described above, a trigger frame for the AP to trigger the UL TB PPDU(s) of the STA(s) is defined. In addition, for the initiation of the above-described multi-AP operation, a trigger frame for the representative AP to trigger the transmission of the DL PPDU of the participating AP may be defined using an existing format or a new format. However, if the single-AP operation and the multi-AP operation are performed separately, collisions and interferences between them may occur, and it may be difficult to effectively use wireless resources, so a method for controlling/supporting them together is required.

Therefore, in the procedure for the above-described multi-AP operation, the present disclosure proposes a method for supporting communication with STAs within the BSS of the representative AP together.

Embodiment 1: When communication of participating AP(s) (e.g., DL PPDU transmission of the participating AP) is triggered by a representative AP, a trigger for TB (trigger-based) PPDU transmission of STA(s) within the BSS of the representative AP may also be indicated. This will be described below with reference to the drawings.

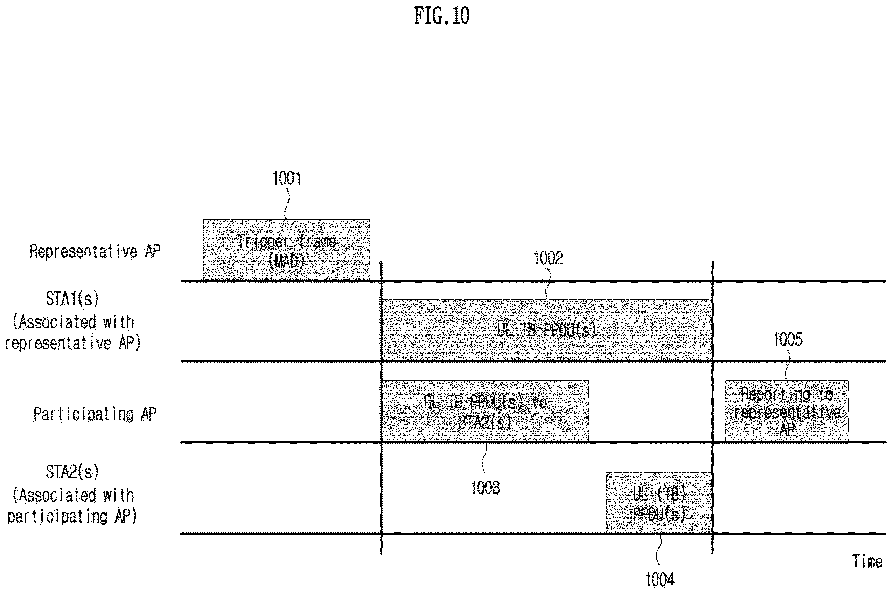

FIG. 10 is a diagram illustrating an aggregated communication process of multi-AP communication and single-AP communication according to an embodiment of the present disclosure.

Referring to FIG. 10, the representative AP transmits a trigger frame (1001) (e.g., to initiate/indicate multi-AP operation). STA1(s) associated with the representative AP (or within the BSS of the representative AP) transmits UL TB PPDU(s) (1002) to the representative AP based on the trigger frame (1001). The participating AP transmits DL PPDU(s) (1003) to STA2(s) associated with the participating AP (or within the BSS of the participating AP) based on the trigger frame (1001). The STA2(s) transmits UL (TB) PPDU(s) (1004) to the participating AP in response to/based on the DL PPDU(s) (1003). Thereafter, the participating AP reports (1005) (e.g., completion/termination of multi-AP operation) to the representative AP.

Here, the trigger frame (1001) (i.e., including both information for triggering transmission of participating AP(s) and information for triggering TB PPDU transmission of STA(s) within the BSS of the representative AP) can be transmitted as one. In addition, the trigger frame (1001) can include both information about participating AP(s) and STA(s) within the BSS whose transmission is triggered by the trigger frame (1001) in the User Info field. In other words, it can be interpreted that the MAD trigger frame and the basic trigger frame are aggregated and used as one trigger frame format.

Here, the participating AP(s) and STA(s) in the BSS may divide and use the frequency region. That is, the frequency region used by the participating AP(s) to transmit the PPDU (1003) and the frequency region used by the STA(s) in the BSS of the representative AP to transmit the UL TB PPDU (1002) may be distinguished from each other (i.e., do not overlap). In addition, if there are multiple participating APs, the frequency region may be divided for each participating AP, and similarly, if there are multiple STAs, the frequency region may be divided for each STA. Here, each frequency region may be distinguished based on the bandwidth size (e.g., 20 MHz, 40 MHz, etc.) and may be distinguished based on the RU allocation unit (e.g., 26 subcarriers, 52 subcarriers, etc.). In addition, the participating AP and STA(s) in the BSS may perform each transmission by controlling the transmission power and using the spatial reuse technique. As above, information about the transmission method (e.g., frequency division or spatial reuse) or frequency/space domain allocation can be indicated by the trigger frame (1001).

In addition, if the representative AP, the participating AP(s), and the STA(s) within the BSS of the representative AP support the above-described subchannel selective transmission (SST) operation, the frequency region for transmission of the trigger frame (1001) for the participating AP(s) and the STA(s) within the BSS may be frequency-divided, so that each trigger frame (1001) may be transmitted. That is, although FIG. 10 illustrates one trigger frame (1001), differently, the first trigger frame transmitted to the participating AP(s) and the second trigger frame transmitted to the STA(s) may be transmitted in different frequency regions. In this case, each trigger frame may include only trigger information for the transmission target (i.e., the participating AP(s) or the STA(s)), or may include the same trigger information (i.e., the trigger information for the participating AP(s) and the STA(s)) even if each trigger frame is transmitted in a different frequency region.

Additionally, UL TB PPDU(s) (1002) of STA(s) within the BSS of the representative AP and DL PPDU(s) (1003) of the participating AP(s) may be transmitted after a short interframe space (SIFS) starting after a trigger frame (1001) for the participating AP(s) and STA(s) within the BSS. Here, the UL TB PPDU(s) (1002) of the STA(s) within the BSS of the representative AP may be equal to the length including the DL PPDU(s) (1003) of the participating AP(s) and the UL (TB) PPDU(s) (1004) (e.g., ACK (acknowledgement)) of the STA(s) within the BSS of the participating AP (or associated with the participating AP). In other words, the UL TB PPDU(s) (1002) of STA(s) within the BSS of the representative AP may end at the same time as the UL (TB) PPDU(s) (1004) of STA(s) within the BSS of the participating AP (or associated with the participating AP) according to the DL PPDU(s) (1003) of the participating AP(s). Alternatively, the length of the UL TB PPDU(s) (1002) of STA(s) within the BSS of the representative AP may be equal to the length from the SIFS starting after the trigger frame (1001) to the SIFS preceding 'Report to Representative AP' (1005). Here, 'Report to Representative AP' (1005) corresponds to step 4 in the DL or UL procedure of the multi-AP operation described above.

Accordingly, the interpretation of the UL length subfield (e.g., see FIG. 9) for the trigger frame in the multi-AP operation and the single-AP operation may be different. That is, in the single-AP operation, it may be interpreted as before, and in the multi-AP operation, it may be interpreted as the length including the transmission(s) of the participating AP(s) and the response(s) of the STA(s) within the BSS of the participating AP. In other words, the values of the UL length subfield for the trigger frame in the multi-AP operation and the single-AP operation may be the same, and even if they are the same values, the interpretation may be different as above.

This is to prevent uplink transmissions to the representative AP (i.e., UL TB PPDU(s) (1002) of STA1(s) and report (1005) to the representative AP) from colliding. In other words, as described above, when the participating AP(s) and STA(s) within the BSS use frequency regions separately, collisions in uplink transmissions to the representative AP do not occur, but when the spatial reuse scheme is used, collisions in uplink transmissions to the representative AP may occur, and thus this is to prevent this. In addition, ACK(s) for UL TB PPDU(s) (1002) of STA(s) within the BSS of the representative AP may be transmitted as delayed ACK(s), if necessary. That is, after the report (1005) to the representative AP (or after SIFS), the transmission of ACK(s) for UL TB PPDU(s) (1002) of STA(s) within the BSS of the representative AP can start. Alternativley, if simultaneous transmit receive (STR) is supported, it can be transmitted as immediate ACK. That is, the representative AP can transmit ACK(s) for UL TB PPDU(s) (1002) of STA(s) within the BSS of the representative AP together with receiving the report (1005) to the representative AP.

In addition, as described above, if the participating AP(s) and the STAs within the BSS of the representative AP operate in frequency division, the length of the UL TB PPDU(s) (1002) of the STA(s) within the BSS of the representative AP may be equal to the length from the SIFS starting after the trigger frame (100) of the representative AP to the 'report to representative AP' (1005) (i.e., until the end). In this case, the ACK(s) for the UL TB PPDU(s) (1002) of the STA(s) within the BSS of the representative AP may be transmitted as an immediate ACK (ACK), if necessary.

Embodiment 2: When a communication of participating AP(s) (e.g., DL PPDU transmission of the participating AP) is triggered by a representative AP, DL PPDU transmission to STA(s) within the BSS of the representative AP may also be performed. This will be described below with reference to the drawings.

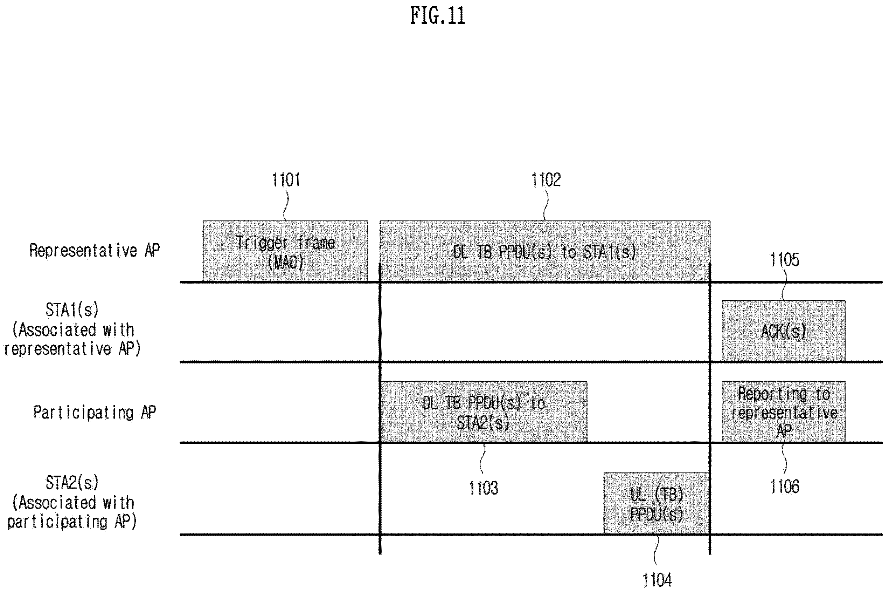

FIG. 11 is a diagram illustrating an aggregated communication process of multi-AP communication and single-AP communication according to an embodiment of the present disclosure.

Referring to FIG. 11, a representative AP transmits a trigger frame (1101) (e.g., to initiate/indicate multi-AP operation). The representative AP transmits DL PPDU(s) (1102) to STA1(s) associated with the representative AP (or within the BSS of the representative AP) after the trigger frame (1101). The participating AP transmits DL PPDU(s) (1103) to STA2(s) associated with the participating AP (or within the BSS of the participating AP) based on the trigger frame (1101). The STA2(s) transmits UL (TB) PPDU(s) (1104) to the participating AP in response to/based on the DL PPDU(s) (1103). Thereafter, STA1(s) transmit ACK(s) (1105) in response to DL PPDU(s) (1102) received from the representative AP. In addition, the participating AP reports (1106) (e.g., completion/termination of multi-AP operation) to the representative AP.

Here, as in the example of FIG. 11, the DL PPDU (1102) for STA (s) within the BSS of the representative AP may be transmitted separately after the SIFS starting after the MAD trigger frame (1101) for the participating AP (s). That is, the MAD trigger frame (1101) and the DL PPDU (1102) may be transmitted separately.

In addition, unlike the example of FIG. 11, the MAD trigger frame (1101) for the participating AP (s) and the DL PPDU (1102) for STA (s) within the BSS of the representative AP may be transmitted as an A-MPDU (aggregated MAC PDU). Alternatively, a MAD trigger frame (1101) for participating AP(s) and a DL PPDU (1102) for STA(s) within the BSS of the representative AP may be transmitted in the form of an A-PPDU (aggregated PPDU).

The trigger frame (1001) includes information for triggering transmission of the participating AP(s). In addition, the trigger frame (1001) may or may not include information about a DL PPDU (1102) transmitted by the representative AP.

Additionally, the DL PPDU(s) (1102) for STA(s) within the BSS of the representative AP may end at the same time as the UL (TB) PPDU(s) (1104) (e.g., ACK) of STA(s) within the BSS of the participating AP (or associated with the participating AP) according to the DL PPDU(s) (1103) of the participating AP. In other words, the DL PPDU(s) (1102) for STA(s) within the BSS of the representative AP may be equal to the length including the DL PPDU(s) (1103) of the participating AP(s) and the UL (TB) PPDU(s) (1104) of STA(s) within the BSS of the participating AP (or associated with the participating AP). Alternatively, the length of DL PPDU(s) (1102) for STA(s) within the BSS of the representative AP may be equal to the length from the SIFS starting after the trigger frame (1101) to the SIFS preceding 'Report to Representative AP' (1106). Here, 'Report to Representative AP' (1106) corresponds to step 4 in the DL or UL procedure of the above-described Multi-AP operation.

This is to prevent collision between DL PPDU(s) (1102) transmitted from the representative AP and reports (1005) to the representative AP.

Here, Ack(s)(1105) according to DL PPDU(s)(1102) of STA(s) within BSS of representative AP may be transmitted after SIFS from the end time of DL PPDU(s)(1102) for STA(s) within BSS of representative AP (or the end time of UL (TB) PPDU(s)(1104) of STA(s) within BSS of participating AP (or associated with participating AP)). In addition, 'Report to representative AP'(1106) of participating AP(s) may also be transmitted at the same time. PPDU carrying Ack(s)(1105) and PPDU carrying 'Report to representative AP'(1106) may be frequency-divided and transmitted in each allocated frequency region or transmitted using spatial reuse technique (for example, a limited transmission power value is indicated from representative AP). Alternatively, the Ack(s) (1105) corresponding to the DL PPDU(s) (1102) to the STA(s) within the BSS of the representative AP may be transmitted delayed (i.e. after 'reporting to the representative AP' (1106)).

In addition, i) DL PPDU(s) (11022) for STA(s) within the BSS of the representative AP and ii) DL PPDU(s) (1103) of the participating AP and UL (TB) PPDU(s) (1104) (e.g., Ack) of STA(s) within the BSS of the participating AP may be transmitted in their own regions by dividing the frequency domain, or may be transmitted in a spatial reuse scheme by adjusting the transmission power of each. Here, the transmission power that the participating APs should use may be transmitted in the trigger frame (1101), and the representative AP may adjust the transmission power of the DL PPDU(s) for STA(s) within the BSS of the representative AP by coordinating with the transmission power that the participating APs should use.

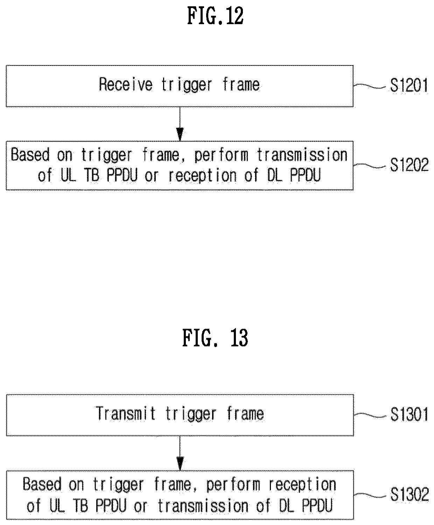

FIG. 12 illustrates an operation of a STA for a PPDU transmission/reception method according to an embodiment of the present disclosure.

Referring to FIG. 12, a STA (hereinafter, a first STA) receives a trigger frame from an AP (hereinafter, a first AP) (i.e., a representative AP, a master AP, a sharing AP) (S1201).

Here, the first STA may correspond to a member within the BSS of the first AP.

Here, the trigger frame may include information for triggering transmission of a DL PPDU (hereinafter, a second PPDU) by a second AP (i.e., a participating AP, a slave AP, or a shared AP) to a second STA (i.e., a member within the BSS of the second AP).

In addition, the trigger frame may include information for triggering transmission of a UL TB PPDU by the first STA to the first AP.

In addition, the trigger frame may include information related to transmission of a DL PPDU (hereinafter, a first DL PPDU) by the first AP to the first STA (for example, when the trigger frame and the first DL PPDU are transmitted separately) or the trigger frame may be transmitted in the form of an A-MPDU or A-PPDU with data from the first AP to the first STA.

The first STA transmits the UL TB PPDU to the first AP or receives the first DL PPDU from the first AP, based on the trigger frame (S1202).

For example, according to the above-described Embodiment 1, the first STA may transmit the UL TB PPDU to the first AP based on the trigger frame.

In this case, the UL TB PPDU and the second DL PPDU may be transmitted in different frequency regions or in a spatial reuse scheme (e.g., by adjusting the transmission power of each in the same frequency domain).

In addition, the length of the UL TB PPDU may include i) the length of the second DL PPDU and ii) the length of the UL PPDU to the second AP by the second STA according to the second DL PPDU. For example, the length of the UL TB PPDU may be equal to {the length of the second DL PPDU + SIFS + the length of the UL PPDU to the second AP by the second STA according to the second DL PPDU}.

In addition, the length of the UL TB PPDU may be equal to the length from {the end of the trigger frame + SIFS} to {the start of the report transmission to the first AP by the second AP - SIFS}.

In addition, the length of the UL TB PPDU may be equal to the length from {the end of the trigger frame + SIFS} to {the end of the report transmission by the second AP to the first AP}.

In addition, for example, according to the above-described Embodiment 2, the first STA may perform reception of the first DL PPDU from the first AP based on the trigger frame.

In this case, the first DL PPDU and the second DL PPDU may be transmitted in different frequency regions or may be transmitted in a spatial reuse scheme (for example, by adjusting transmission power in the same frequency domain).

In addition, the first DL PPDU may end at the same time point as the UL PPDU to the second AP by the second STA according to the second DL PPDU. For example, the length of the first DL PPDU may be equal to {the length of the second DL PPDU + SIFS + the length of the UL PPDU to the second AP by the second STA according to the second DL PPDU}. In addition, for example, the length of the first DL PPDU may be equal to the length from {the end of the trigger frame + SIFS} to {the start of the report transmission to the first AP by the second AP - SIFS}.

The method described in the example of FIG. 12 may be performed by the first device (100) of FIG. 1. For example, one or more processors (102) of the first device (100) of FIG. 1 may be configured to receive a trigger frame from the second device (200) (i.e., AP) through the transceiver(s) (106), and perform transmission of a UL TB PPDU to the second device (200) through the transceiver(s) (106) or reception of a first DL PPDU from the second device (200) through the transceiver(s) (106) based on the trigger frame. Furthermore, one or more memories (104) of the first device (100) may store commands for performing the method described in the example of FIG. 12 or the examples described above when executed by one or more processors (102).

FIG. 13 illustrates an operation of a AP for a PPDU transmission/reception method according to an embodiment of the present disclosure.

Referring to FIG. 13, an AP (hereinafter, a first AP) (i.e., a representative AP, a master AP, a sharing AP) transmits a trigger frame (S1301).

Here, the trigger frame may include information for triggering transmission of a DL PPDU (hereinafter, a second PPDU) by a second AP (i.e., a participating AP, a slave AP, or a shared AP) to a second STA (i.e., a member within the BSS of the second AP).

Additionally, the trigger frame may include information for triggering transmission of a UL TB PPDU to the first AP by a first STA (i.e., a member within the BSS of the first AP).

In addition, the trigger frame may include information related to transmission of a DL PPDU (hereinafter, a first DL PPDU) by the first AP to the first STA (for example, when the trigger frame and the first DL PPDU are transmitted separately) or the trigger frame may be transmitted in the form of an A-MPDU or A-PPDU with data from the first AP to the first STA.

The AP performs reception of a UL TB PPDU from the first STA or transmission of a first DL PPDU to the first STA, based on the trigger frame (S1302).

For example, according to the above-described Embodiment 1, the first STA may transmit the UL TB PPDU to the first AP based on the trigger frame.

In this case, the UL TB PPDU and the second DL PPDU may be transmitted in different frequency regions or in a spatial reuse scheme (e.g., by adjusting the transmission power of each in the same frequency domain).

In addition, the length of the UL TB PPDU may include i) the length of the second DL PPDU and ii) the length of the UL PPDU to the second AP by the second STA according to the second DL PPDU. For example, the length of the UL TB PPDU may be equal to {the length of the second DL PPDU + SIFS + the length of the UL PPDU to the second AP by the second STA according to the second DL PPDU}.

In addition, the length of the UL TB PPDU may be equal to the length from {the end of the trigger frame + SIFS} to {the start of the report transmission to the first AP by the second AP - SIFS}.

In addition, the length of the UL TB PPDU may be equal to the length from {the end of the trigger frame + SIFS} to {the end of the report transmission by the second AP to the first AP}.

In addition, for example, according to the above-described Embodiment 2, the AP may perform transmission of the first DL PPDU to the first STA based on the trigger frame.

In this case, the first DL PPDU and the second DL PPDU may be transmitted in different frequency regions or may be transmitted in a spatial reuse scheme (for example, by adjusting transmission power in the same frequency domain).

In addition, the first DL PPDU may end at the same time point as the UL PPDU to the second AP by the second STA according to the second DL PPDU. For example, the length of the first DL PPDU may be equal to {the length of the second DL PPDU + SIFS + the length of the UL PPDU to the second AP by the second STA according to the second DL PPDU}. In addition, for example, the length of the first DL PPDU may be equal to the length from {the end of the trigger frame + SIFS} to {the start of the report transmission to the first AP by the second AP - SIFS}.

The method described in the example of FIG. 13 may be performed by the second device (200) of FIG. 1. For example, one or more processors (202) of the second device (200) of FIG. 1 may be configured to transmit a trigger frame through the transceiver(s) (106), and perform reception of a UL TB PPDU from the first device (200) through the transceiver(s) (206) or transmission of a first DL PPDU to the first device (200) through the transceiver(s) (206) based on the trigger frame. Furthermore, one or more memories (204) of the second device (200) may store commands for performing the method described in the example of FIG. 13 or the examples described below when executed by one or more processors (202).

Unlike a trigger frame for triggering UL TB PPDU(s) of STA(s) in a conventional wireless LAN system, a trigger frame according to examples of the present disclosure has a feature of supporting communication with STAs within a BSS of a representative AP while triggering the multi-AP operation as described above. Accordingly, since the single-AP operation and the multi-AP operation are performed by aggregating them, the occurrence of collisions and interference between them can be minimized or prevented, and the effect of efficiently using wireless resources can be achieved.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Availability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless local area network (WLAN) system, the method comprising:
receiving a trigger frame from a first access point (AP); and
performing transmission of an uplink trigger-based physical protocol data unit (UL TB PPDU) to the first AP or reception of a first downlink PPDU (DL PPDU) from the first AP, based on the trigger frame,
wherein the trigger frame includes information for triggering transmission of a second DL PPDU by a second AP to a second STA.

2. The method of claim 1, wherein transmission of the UL TB PPDU is performed based on the trigger frame.

3. The method of claim 2, wherein the UL TB PPDU and the second DL PPDU are transmitted in different frequency regions or in a spatial reuse scheme.

4. The method of claim 2, wherein a length of the UL TB PPDU includes i) a length of the second DL PPDU and ii) a length of a UL PPDU to the second AP by the second STA according to the second DL PPDU.

5. The method of claim 2, wherein a length of the UL TB PPDU is equal to a length from {an end of the trigger frame + SIFS (short interframe space)} to {a start of report transmission by the second AP to the first AP - SIFS}.

6. The method of claim 2, wherein a length of the UL TB PPDU is equal to a length from {an end of the trigger frame + SIFS (short interframe space)} to {an end of report transmission by the second AP to the first AP}.

7. The method of claim 1, wherein reception of the first DL PPDU is performed based on the trigger frame.

8. The method of claim 7, wherein the first DL PPDU and the second DL PPDU are transmitted in different frequency regions or in a spatial reuse scheme.

9. The method of claim 7, wherein the first DL PPDU is terminated at a same time as a UL PPDU to the second AP by the second STA according to the second DL PPDU.

10. A first station (STA) device in a wireless local area network (WLAN) system, the device comprising:
at least one transceiver; and
at least one processor connected to the at least one transceiver,
wherein the at least one processor configured to:
receive a trigger frame from a first access point (AP); and
perform transmission of an uplink trigger-based physical protocol data unit (UL TB PPDU) to the first AP or reception of a first downlink PPDU (DL PPDU) from the first AP, based on the trigger frame,
wherein the trigger frame includes information for triggering transmission of a second DL PPDU by a second AP to a second STA.

11. A method performed by a first access point (AP) in a wireless local area network (WLAN) system, the method comprising:
transmitting a trigger frame; and
receiving an uplink trigger-based physical protocol data unit (UL TB PPDU) from a first station (STA) or transmitting a first downlink PPDU (DL PPDU) to the first STA, based on the trigger frame,
wherein the trigger frame includes information for triggering transmission of a second DL PPDU to the second STA by the second AP.

12. A first access point (AP) device in a wireless local area network (WLAN) system, the device comprising:
at least one transceiver; and
at least one processor connected to the at least one transceiver,
wherein the at least one processor configured to:
transmit a trigger frame; and
receive an uplink trigger-based physical protocol data unit (UL TB PPDU) from a first station (STA) or transmitting a first downlink PPDU (DL PPDU) to the first STA, based on the trigger frame,
wherein the trigger frame includes information for triggering transmission of a second DL PPDU to the second STA by the second AP.

13. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to any one claim of claim 1 to claim 9.

14. At least one non-transitory computer-readable medium storing at least one instruction, wherein:
the at least one instruction controls a device to perform a method according to any one claim of claim 1 to claim 9 in a wireless local area network (WLAN) system by being executed by at least one processor.
